# EUROPEAN PATENT APPLICATION

(11) **EP 3 346 156 A1**
(43) Date of publication of application: **11.07.2018**
(21) Application number: 17202255.0
(22) Date of filing: 17.11.2017
(51) Int. Cl.: F16F 9/05

(54) **AIR SPRING**

(30) Priority: 05.01.2017 JP 2017000388
(71) Applicant: TOYO TIRE & RUBBER CO., LTD., Itami-shi Hyogo 664-0847 (JP)
(72) Inventor: Yasunaga, Yuuki, Hyogo, 664-0847 (JP)
(74) Representative: Knoop, Philipp

(57) **Abstract**

An air spring is provided capable of preventing damage to a diaphragm due to contact surface pressure with a guide surface. A conical stopper 3 includes an annular bead seat 6. The bead seat 6 retains a lower bead section 5 of a diaphragm 4. A guide surface 7 is provided radially outside of the bead seat 6. The guide surface 7 guides a central portion of the diaphragm 4 radially outward and obliquely downward. A relaxing section 18 is provided between an inner edge portion 16 and an outer edge portion 17 of the guide surface 7. The inner edge portion 16 and the outer edge portion 17 each have an arcuate shape. The relaxing section 18 has a linear shape.

## Description

### [Technical Field]

The present invention relates to an air spring provided in, for example, railway vehicles, automobiles, various industrial machines or the like.

### Description of the Related Art

### [BACKGROUND OF THE INVENTION]

Generally, an air spring provided in a railway vehicle or the like includes a diaphragm formed of a cylindrical rubber film and provided between an upper member and a lower member (for example, Japanese Patent Document 1 Laid-Open No. 2002-187548 (paragraph 0014, Figure 1)).

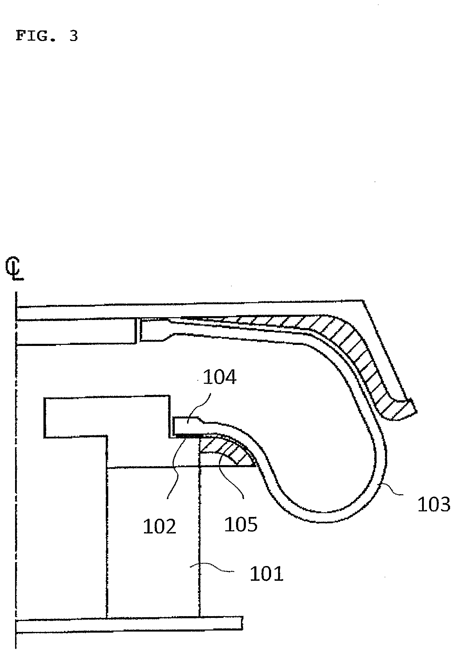

An air spring in Japanese Patent 1 Laid-Open No. 2002-187548 shown in Figure 3 is configured such that a bead seat 102 provided on a lower member 101 retains a lower bead section 104 of a diaphragm 103, and a lower end of the diaphragm 103 is pressed inward and upward. A guide surface 105 made of rubber is provided on an outside of the bead seat 102, and guides a central portion of the diaphragm 103 outward and obliquely downward.

### [Prior Art Documents]

### [Patent Documents]

[Patent Document 1]Japanese Patent Document 1 Laid-Open No. 2002-187548 (paragraph 0014, Figure 1)

### [Summary of Invention]

### [Problems to be Solved by the Invention]

For the air spring in Japanese Patent Laid-Open No. 2002-187548, a downward force acting on the upper member is partially transmitted as tension to the diaphragm by internal air pressure. Further, the tension of the diaphragm is transmitted to the lower member by contact surface pressure between the diaphragm and the guide surface, and the contact surface pressure repeatedly varies with repeated displacement of the upper member.

The contact surface pressure between the guide surface and the diaphragm increases with increasing curvature of the guide surface, and strongly compresses a narrow range of the diaphragm near the lower bead section in a thickness direction to locally bend a reinforcing cord layer embedded in the diaphragm. The local bending of the reinforcing cord layer varies with the repeated displacement of the upper member, and in particular, may damage an area of the reinforcing cord layer firmly locked to a bead core of the lower bead section.

An object of the present invention is to provide an air spring capable of preventing damage to a diaphragm due to contact surface pressure with a guide surface.

### [Means for Solving the Problems]

To achieve the above object, the present invention provides an air spring including a cylindrical diaphragm provided between an upper member and a lower member, a lower end of the diaphragm being pressed inward and upward, wherein the diaphragm includes a reinforcing cord layer embedded in a cylindrical rubber film, the reinforcing cord layer being locked to a ring-like bead core embedded in a lower bead section. Further, the lower member includes an annular bead seat that retains the lower bead section of the diaphragm, and a guide surface that is provided radially outside of the bead seat and guides a central portion of the diaphragm on a generating line radially outward and obliquely downward, the guide surface includes a relaxing section between an inner edge portion and an outer edge portion, and in a vertical section of the lower member, the inner edge portion and the outer edge portion each have an arcuate shape protruding inward of the diaphragm, and the relaxing section has a curvature smaller than that of the inner edge portion and the outer edge portion.

With the above configuration, the relaxing section having a small curvature is provided between the inner edge portion and the outer edge portion of the guide surface to reduce contact surface pressure with the diaphragm in the relaxing section, thereby allowing the inner edge portion and the outer edge portion that apply high contact surface pressure to the diaphragm to be separated. This can prevent a narrow range of the diaphragm near the lower bead section from being strongly compressed in a thickness direction, reduce local bending of the reinforcing cord layer, and prevent damage to an area of the reinforcing cord layer locked to the bead core due to repeated displacement of the upper member.

The guide surface may be formed of a hard material. This can provide a preferable aspect of the present invention. Specifically, if the guide surface is elastic like rubber, the contact surface pressure between the guide surface and the diaphragm deforms the diaphragm and also the guide surface. Thus, even without the relaxing section, compression deformation of the diaphragm due to the contact surface pressure can be relaxed to reduce local bending of the reinforcing cord layer to some extent. On the other hand, if the guide surface is formed of a hard material, the relaxing section is provided in the guide surface to prevent damage to the reinforcing cord layer although a relaxing effect by the deformation of the guide surface cannot be obtained.

The relaxing section may have a linear shape in the vertical section of the lower member. With this configuration, the contact surface pressure in the relaxing section due to vertical tension of the diaphragm can be made zero, and the contact surface pressure between the relaxing section and the diaphragm can be minimized, thereby minimizing local bending of the reinforcing cord layer.

Also, the relaxing section may have a length in the vertical section of the lower member longer than a total length of the inner edge portion and the outer edge portion. With this configuration, the inner edge portion and the outer edge portion can be sufficiently separated, thereby preventing a narrow range near the lower bead section from being strongly compressed in a thickness direction.

### [Effect of the Invention]

As described above, according to the present invention, the guide surface that guides the diaphragm radially outward and obliquely downward is provided radially outside of the bead seat of the lower member, and the relaxing section having a small curvature is provided between the inner edge portion and the outer edge portion of the guide surface. This allows the inner edge portion and the outer edge portion that apply high contact surface pressure to the diaphragm to be separated. This can prevent a narrow range near the lower bead section from being strongly compressed in a thickness direction, reduce local bending of the reinforcing cord layer, and prevent damage to the diaphragm due to repeated displacement of the upper member.

### [BRIEF DESCRIPTION OF THE DRAWINGS]

Figure 1 is a vertical sectional view of an air spring according to the present invention;
Figure 2 is a sectional view of essential portions of the air spring; and
Figure 3 is a sectional view of a conventional air spring.

### [DETAILED DESCRIPTION OF THE PREFERRED EMBODIMENT]

Now, with reference to the drawings, an embodiment of an air spring according to the present invention will be described.

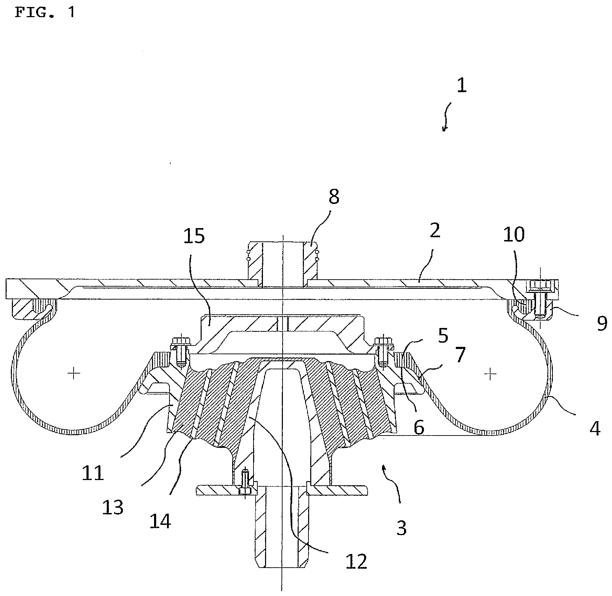

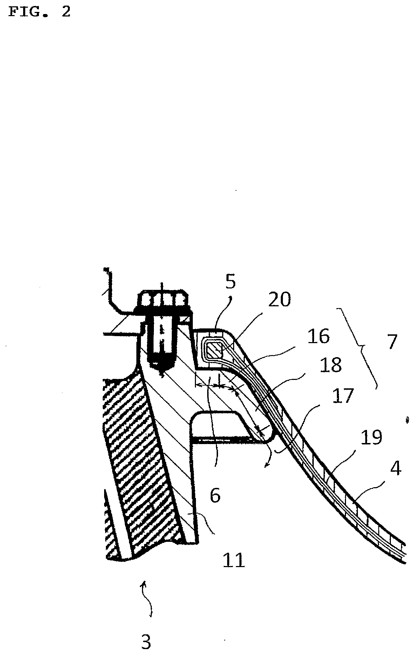

As shown in Figures 1 and 2, an air spring 1 is provided in, for example, a railway vehicle, and configured such that a cylindrical diaphragm 4 is provided between an upper plate 2 as an upper member attached to, for example, a vehicle body and a conical stopper 3 as a lower member attached to, for example, a bogie, and a lower end of the diaphragm 4 is pressed inward and upward. Further, the conical stopper 3 includes an annular bead seat 6 that retains a lower bead section 5 of the diaphragm 4, and a guide surface 7 that is provided radially outside of the bead seat 6 and guides a central portion of the diaphragm 4 on a generating line radially outward and obliquely downward.

The upper plate 2 is formed of, for example, a steel disk, and a cylindrical boss section 8 fitted in a circular hole at a center of the upper plate 2 engages, for example, a vehicle body, and forms an air inlet for supplying air into the diaphragm 4. An attachment ring 9 is fastened by a bolt to a peripheral edge of the upper plate 2 so as to seal and secure the upper bead section 10 of the diaphragm 4 to the peripheral edge.

The conical stopper 3 is configured such that a plurality of cylindrical elastic layers 13 and a plurality of intermediate cylinders 14 are provided between an outer cylinder 11 to which a lower end of the diaphragm 4 is secured and a central material 12 attached to a bogie. The outer cylinder 11 is, for example, a steel cylinder, and an abutment member 15 that restricts displacement of the upper plate 2 is attached to an upper end of the outer cylinder 11.

The bead seat 6 is formed to annularly expand radially outward from an outer peripheral surface of the outer cylinder 11, and retains the lower bead section 5 externally fitting an upper end of the outer cylinder 11, thereby securing the lower end of the diaphragm 4 to the conical stopper 3.

The guide surface 7 extends from the bead seat 6 radially outward and obliquely downward, and guides the diaphragm 4 from the bead seat 6 obliquely downward. In the guide surface 7, an inner edge portion 16 and an outer edge portion 17 are directed radially outward, that is, each have an arcuate shape protruding inward of the diaphragm 4 in the vertical section, and a linear relaxing section 18 is provided between the inner edge portion 16 and the outer edge portion 17 in the vertical section. The relaxing section 18 has a length in the vertical section longer than a total length of the inner edge portion 16 and the outer edge portion 17.

The diaphragm 4 includes a reinforcing cord layer 19 embedded in a cylindrical rubber film, the reinforcing cord layer 19 is locked to a ring-like bead core 20 embedded in the lower bead section 5, and the upper bead section 10 and the lower bead section 5 are held and sealed by the upper plate 2 and the outer cylinder 11.

Air is trapped in the diaphragm 4, and air pressure inside the diaphragm 4 directly elastically supports a load placed on the upper plate 2 from, for example, the vehicle body. Further, the lower end of the diaphragm 4 is pressed upward, and thus a force transmitted as tension from the upper plate 2 to the diaphragm 4 by the air pressure is transmitted to the conical stopper 3 as the lower member.

The tension acting on the diaphragm 4 is partially transmitted to the bead seat 6 via the lower bead section 5 in which the bead core 20 is embedded, and also transmitted to the guide surface 7 by contact surface pressure due to an arcuate shape of the guide surface 7 when the diaphragm 4 is guided obliquely downward from the bead seat 6 by the guide surface 7.

With the above configuration, the relaxing section 18 is provided between the inner edge portion 16 and the outer edge portion 17 that have increasing contact surface pressure with the diaphragm 4 due to the arcuate shape, thereby allowing a range with high contact surface pressure to be separated, and preventing a narrow range of the diaphragm 4 near the lower bead section 5 from being strongly compressed. This can reduce bending of the reinforcing cord layer 19 near the bead core 20 having high stiffness, and prevent damage to the diaphragm 4 due to repeated displacement of the upper plate 2.

The present invention is not limited to the above described embodiment, but various changes may be made within the scope of the present invention. For example, the length of the relaxing section 18 in the vertical section is preferably longer than the total length of the inner edge portion 16 and the outer edge portion 17, but a shorter length can provide advantages to some extent. Also, the shape of the relaxing section 18 is not limited to the linear shape in the vertical section, but having a smaller curvature than the inner edge portion 16 and the outer edge portion 17 can provide desired advantages. The guide surface 7 may be made of rubber or the like rather than the hard material.

### Reference Signs List

- 1: air spring
- 2: upper plate (upper member)
- 3: conical stopper (lower member)
- 4: diaphragm
- 5: lower bead section
- 6: bead seat
- 7: guide surface
- 8: boss section
- 9: attachment ring
- 10: upper bead section
- 11: outer cylinder
- 12: central material
- 13: cylindrical elastic layer
- 14: intermediate cylinder
- 15: abutment member
- 16: inner edge portion
- 17: outer edge portion
- 18: relaxing section
- 19: reinforcing cord layer
- 20: bead core

## Claims

1. An air spring comprising a cylindrical diaphragm provided between an upper member and a lower member, a lower end of the diaphragm being pressed inward and upward,
wherein the diaphragm includes a reinforcing cord layer embedded in a cylindrical rubber film, the reinforcing cord layer being locked to a ring-like bead core embedded in a lower bead section,
the lower member includes an annular bead seat that retains the lower bead section of the diaphragm, and a guide surface that is provided radially outside of the bead seat and guides a central portion of the diaphragm on a generating line radially outward and obliquely downward,
the guide surface includes a relaxing section between an inner edge portion and an outer edge portion, and in a vertical section of the lower member, the inner edge portion and the outer edge portion each have an arcuate shape protruding inward of the diaphragm, and the relaxing section has a curvature smaller than that of the inner edge portion and the outer edge portion.

2. The air spring according to claim 1, wherein the guide surface is formed of a hard material.

3. The air spring according to claim 1 or 2, wherein the relaxing section has a linear shape in the vertical section.

4. The air spring according to claim 1, 2 or 3, wherein the relaxing section has a length in the vertical section longer than a total length of the inner edge portion and the outer edge portion.
